# EUROPEAN PATENT SPECIFICATION

(11) **EP 0 418 868 B1**
(45) Date of publication and mention of the grant of the patent: **11.06.1997**
(21) Application number: 90118041.4
(22) Date of filing: 19.09.1990
(51) Int. Cl.: G06T 11/60

(54) **Image processing system**
Bildverarbeitungssystem
Système de traitement d'image

(30) Priority: 21.09.1989 JP 245550/89
(43) Date of publication of application: 27.03.1991
(73) Proprietor: FUJI PHOTO FILM CO., LTD., Kanagawa (JP)
(72) Inventor: Horikawa, Hiroshi, Ashigara-Kamigun, Kanagawa (JP); Akimoto, Kazuhiko, Ashigara-Kamigun, Kanagawa (JP); Hoshino, Fumio, Ashigara-Kamigun, Kanagawa (JP); Koyama, Hiroo, Ashigara-Kamigun, Kanagawa (JP)
(74) Representative: Grünecker, Kinkeldey, Stockmair & Schwanhäusser Anwaltssozietät

(56) References cited:
- EP-A- 0 320 014
- COMPUTER DESIGN. vol. 23, no. 12, October 1984, LITTLETON, MASSACHUSETTS US pages 141 - 147; R.S.M. WULFF: 'Multiple micros distribute text and graphics functions'

## Description

### BACKGROUND OF THE INVENTION

### 1. Field of the Invention

The present invention relates to an image procesisng system preparing a block copy for priting, particularly to the system, in the art of composition and layout processing of pictures such as characters, patterns, photographs and the like which are read as images. preparing an image film for producing a high quality block copy for printing or a printing mask plate.

### 2. Description of the Prior Art

For the system of this kind, a system is known from EP-A-320 014 which applies an image data stored in an disc or the like, and carries out image processing such as layout composition and the like on a CRT display to prepare an output image.

In particular, this reference discloses an image processing system having an input unit for reading an original page and for generating image data corresponding to said image, a file server for storing data including image files corresponding to the generated image data, an input controller for storing data read by said input unit, a work station for displaying the stored image and for processing the image files, an image setter for processing the image files displayed on the work station, a medium-quality image output unit for outputting a galley proof, said galley proof outputted from said medium-quality image output unit being a plain paper output for brief previewing a file output appearance on a block copy and a high-quality image output unit for outputting image data transferred from the image setter as the block copy to be outputted, wherein the block copy is a film output for forming a printing plate. Methods for generating the "galley proof" and the "block copy" are known to the skilled man.

Computer Design, Vol. 23, No. 12, P. 141-147; October 1984; R.S.M. Wulff: "Multiple micros distribute text and graphics functions" describes a system which merges text and art in a single database and lets the user see complete images containing both; different graphics data are entered into the system via various input units; images can be stored in vector form; both text and data can be edited; a background processor functions as a file server, stores structured data and image data and also functions as an image setter an converts continuous-tone images to screened half-tones.

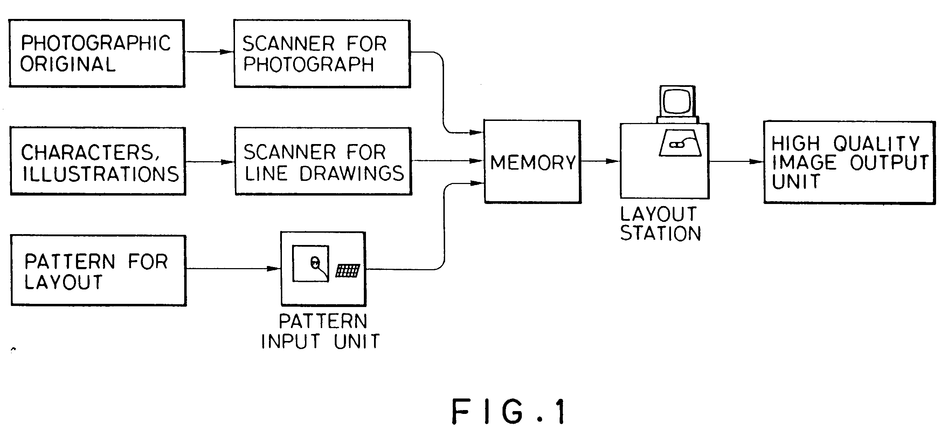

There is a system of this kind as shown in FIG.1. In this examples, a block copy for printing or a printing mask plate are prepared in such procedure as following; a photographic original is read by a scanner as a continuous tone image, characters, illustrations and the like are read by a scanner for line drawings as binary images, pattern informations on laying out each image by means of a pattern input unit are temporarily received in a disc memory, an operator instructs necessary image processings such as composition and the like to layout referring to line drawings, photographs and the like as well as aforementioned pattern informations, and then a block copy for printing or a printing mask plate are prepared on a film or a photographic paper. The system as configurated in FIG.1 can collectively layout photographs, characters and illustrations, however has some defects as following. That is, although the system need to be inputted, in advance, the considerably detailed pattern information on a layout description for the purpose of laying out photographs, characters and illustrations, it is not always possible in the case of the practical block copy production to set out the work after collecting all of the character originals, the photographic originals and the layout instruction information. In other word, for the most cases, the work ought to be started only with a roughly-drawn layout or a part of the originals. Consequently the operation becomes complicated and it becomes necessary to make a data for inputting the pattern information on an exact layout from the roughly-drawn layout board. In addition, because the photographic image is a multivalued (continuous tone) image while characters and illustrations are binary images, it is necessary to carry out screening process for a display image and an output image on a layout station as well as essential operations such as position fitting, image composing and the like, thus disadvantageously making the operation of the system complicated. Moreover, when an image becomes larger, higher techniques are needed for the image composing, for example if a high quality image including such as outlining characters, pinpoint exact fitting, fitting illustrated characters in the photographic image and the like is needed to be prepared, such operation defectively takes a long time for defining the layout.

As the other conventional image processing system for printing to be intended to synthetically deal with characters, illustrations and photographic images, among others, desk top publishing art has mainly been realized aiming at processing for code characters, illustrations and photographic images. In the system of this kind as code characters are necessarily used, it is required for the system to be equipped with various kinds of styles of characters for reaching the practical production standard of the block copy for printing. Particularly in relation to Japanese, what are existing as kinds of code characters in the desk top publishing art are considerably inefficient for the printing traders and merely composing a style of a font for the system requires much labour and time. Moreover, the existing desk top publishing art is much less capable and efficient of its image processing as used for the printing traders.

Further, an electronic publishing composer has been realized as character-image synthetic processing system such as, for example, the IPS system of FUJITSU LIMITED make or the N5170 system of NEC Corporation make. The electronic publishing composer is adapted to collectively perform an arrangement such as layout, composition, movement and the like for images inputted via a scanner and code characters of predetermined styles by operating on a CRT image, thereby outputting a block copy via printer outputting a relatively high density image ( 400 DPI to 700 DPI ). The electronic publishing composer of this kind as well as the aforementioned desk top publishing art, has the defect that the kinds of available font are insufficient and limited, further has less expressivity for the halftone image that counts in the printing image art.

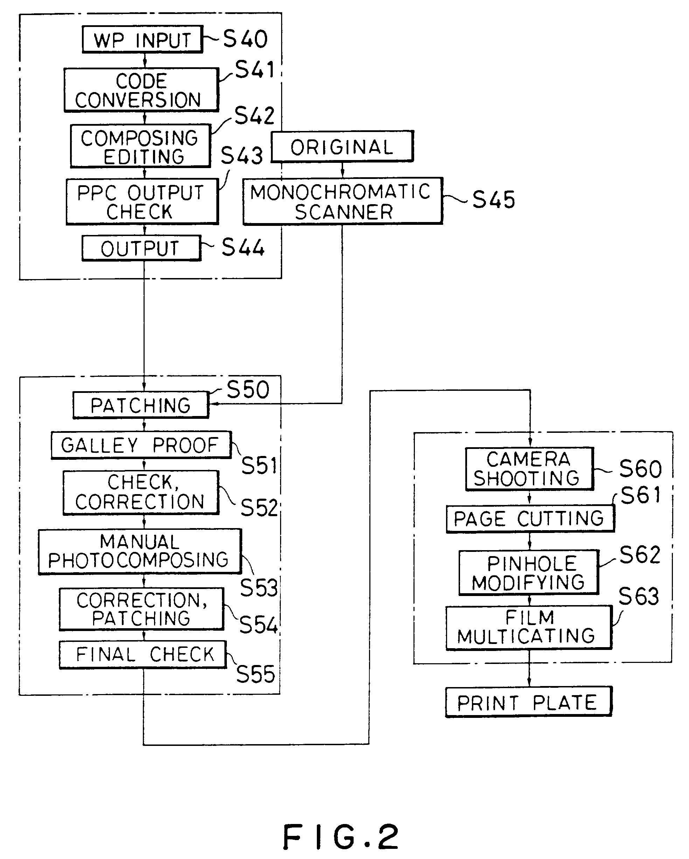

As discussed above, the conventional methods are still less capable and efficient for collectively and electronically processing characters and images. FIG.2 is a flow chart showing a typical manufacturing process including manual operations of a conventional print plate for printing, which comprises steps of inputting code data (Step S40) prepared by a word processor and the like, checking a PPC output after a code conversion (Step S41) of the code as prepared and a composing editing (Step S42), and outputting characters from a computer aided photocomposer ( hereinafter referred to as " photocomposer " ) (Steps S43 and S44). The original for designs or the like is read out by a monotone scanner such as to output the image as screen dotted (Step S45). Computer aided and manual photocomposer character outputs, a line image, and an illustration and the like as well as such the screen dotted output are manually paste up (Step S50). A galley proof of its synthetic image is obtained to check its content and to correct it if necessary (Steps S51 and S52). Then, the manual photocomposer output for paste-up is provided (Step S53) to finally check and correct the image (Steps S54 and S55). These steps are followed by operations such as a camera work (Step S60), a page cutting (Step S61), a pinhole opaque (Step S62), and a film photo-composing (Step S63) for plate making. It is noted that disadvantages derived from the high quality image output unit are that the image outputted thereby to silver halide sensitive materials ( such as a sensitive paper, a film or the like ) is made white but not black or is turned adverse by a minute spot. These modifications and amendments are termed " pinhole amendments ".

As seen from the foregoing, the conventional plate making process requires a great deal of operations such as repeated paste-up, photocomposing to involve much labor and time, thus considerably decreasing efficiency. In addition, photosensitive materials such as a film, a photographic paper or the like which are intermediately produced has been wasted.

It is the object of the present invention to provide an image processing system similar to that described in EP-A-0 320 014 which generates the block copy and the galley proof in an improved manner.

This object is solved by the subject matter of claim 1. Preferred embodiments of the present invention are the subject matter of the dependent claims.

The nature, principle and utility of the invention will become more apparent from the following detailed description when read in conjunction with the accompanying drawings.

### BRIEF DESCRIPTION OF THE DRAWINGS

In the accompanying drawings:
FIG.1 is a diagram showing a working process for collectively disposing photographs, characters, illustrations and the like according to the conventional process;
FIG.2 is a flow chart showing a process of manufacturing conventional printing mask plates;
FIGs.3A and 3B are block diagrams showing the overall configuration of the present invention;
FIG.4 is a flow chart showing one example of the operation according to the present invention;
FIG.5 is a block diagram showing one example of the configurations of the input controller;
FIGs.6A and 6B are flow charts showing operation examples of the file server according to the present invention;
FIG.7 is a flow chart showing action examples of the work station;
FIGs.8A through 8G are diagrams explaining operational examples of the work station during editing process or the like;
FIG.9 is a block diagram showing in detail the configuration of the image setter;
FIG.10 is a flow chart showing an operation example of the same image setter;
FIG.11 is a block diagram showing in detail the configuration of the output portion of the image setter;
FIG.12 is a flow chart showing an operational example of the image setter;
FIG.13 is a diagram showing in detail the circuit configuration of the preset counter;
FIGs.14A through 14D, FIGs.15 and 16 are diagrams explaining the operation of the same preset counter, respectively;
FIGs.17A to 17C are original example used for preparing a block copy according to the present invention;
FIG.18 is an output image example of a block copy prepared according to the present invention; and
FIGs.19 through 24 are diagrams explaining the content of the layout instruction for preparing a block copy according to the present invention.

### DESCRIPTION OF THE PREFERRED EMBODIMENTS

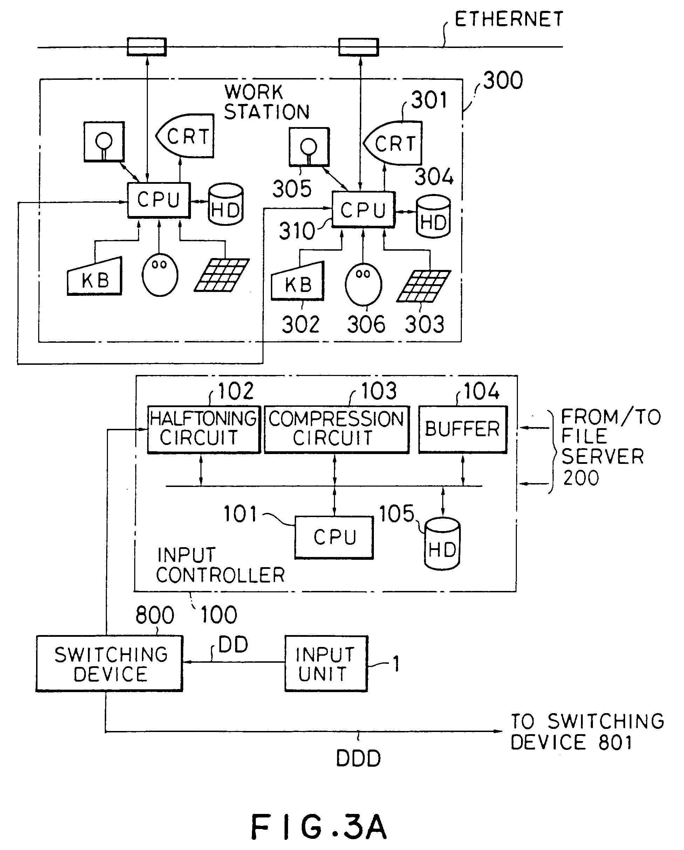

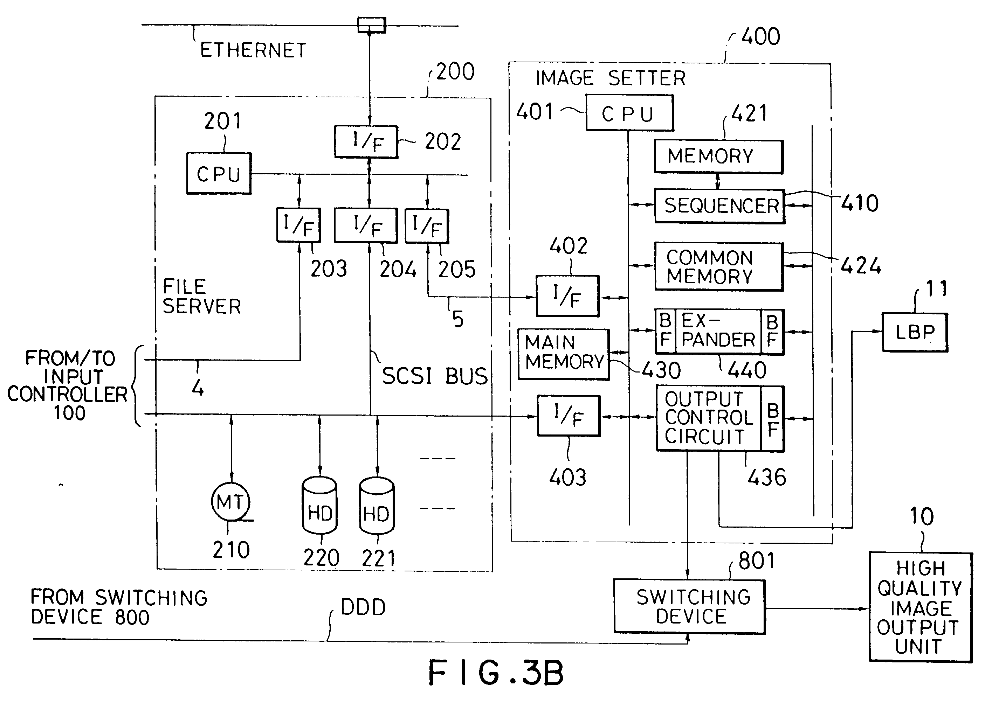

FIGs.3A and 3B are block diagrams showing the whole arrangement of a system according to this invention. An input unit 1 ( such as a scanner or the like ) is adapted to read originals such as photographs, characters, patterns and the like. Density data ( or tone data ) DD of the image as obtained by the input unit 1 are inputted to an input controller 100 through a switching device 800. The input controller 100 dots the aforementioned inputted density data DD through an in corporated CPU 101 by means of a halftoning circuit 102 and is then compressed by a compression circuit 103. The data is temporarily stored in a buffer 104 and transferred for storing it in a magnetic tape 210 of a file server 200 or hard discs 220, 221,··· ··· thereof. The input controller 100 includes a local disc ( hard disc ) 105 for temporarily storing the data. The file server 200 is provided with a CPU 201 and connected to another apparatus by interfaces 202 to 205. The work station 300 carries a plurality of terminal units each having a CRT 301 as a display means, a keyboard 302 and a mouse 306 as an input operative means, and a hard disc 304 and a floppy disc 305 as a memory means. The work station 300 is interconnected by an Ethernet ( one type of bus line systems ) to the file server 200. Image data obtained by the input controller 100, which is thinned ( selected ) for CRT display are stored in the magnetic tape 210 or the hard discs 220, 221, ··· ···. This data is transferred by interfaces 204, 202 read out through an SCSI bus to the work station 300. A control command and the like between the work station 300 and the input controller 100 are transferred through the interface 203 of the file server 200 to which an image setter 400 is connected. More specifically, the image setter 400 is formed with a CPU 401 which is connected by an interface 402 to an auxiliary data line 5 of the file server 200 and is coupled by an interface 403 to the SCSI bus. The image setter 400 further includes a sequencer 410 and a buffer 411 for storing a required data. A high quality image output unit 10 for outputting the image of high quality image (dot density 1200 DPI) and a laser beam printer (medium quality image output unit) 11 for inputting the image of relatively low quality image (dot density 400 DPI) are connected to the image setter 400.

Now, the input unit 1 is adapted to digitize all of the photograph ( gray scale image or halftone image ), line image, and the character image ( binary image ) by means of density data ( 8 bits/picture element ). A signal inputted based on 8 bits/picture element causes the photograph to be dotted by the input controller 100 so that an information ( 4 bit/picture element ) may be provided. The binary image is converted to an information ( 1 bit/picture element ) or another information ( 4 bits/picture element ). These 4 bits/picture element and 1 bit/picture element are compressed for use in the LBP 11 and the high quality image output unit 10. In addition the data for CRT display are thinned. Although the character is inputted by a code from the work station 300, it may be inputted in an image form from the input unit 1. As result, even if what is inputted in the form of an image is the character, it is treated as the image ( bit map data ). The image is outputted independently by the image setter 400. However, the image setter 400 is intended to convert all of code and vector informations to the bit map data so that the image output as referred to herein is used to mean the output of the bit map data. The processed image is adapted to be outputted by a laser beam printer 11 via an output control circuit 436 as well as by a high quality image output unit 10 via the switching device 801.

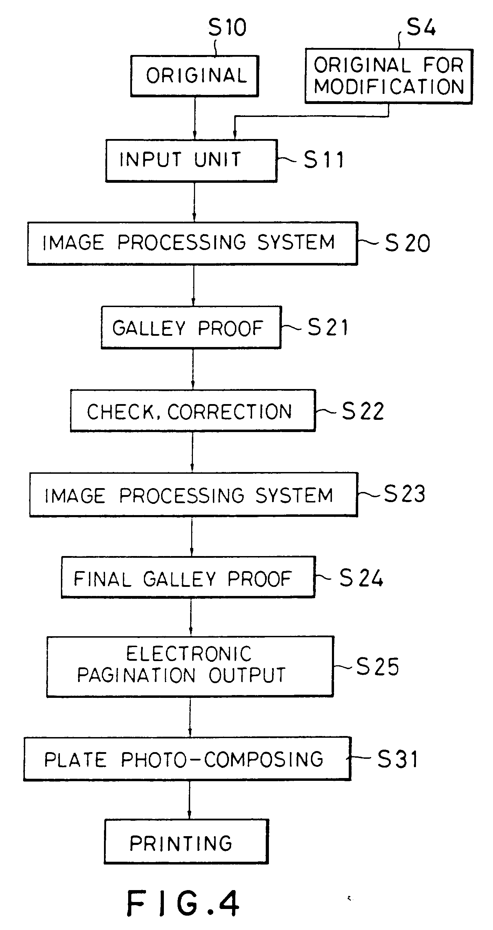

FIG.4 is a flow chart showing the sequence of the steps of the image processing system according to this invention. The originals such as the photograph, character or the like are read out by the input unit 1 (Steps S10 and S11). The read data are then inputted to the image processing system (Step S20). The density data DD inputted to the image processing system is subjected to processes ( as will be described later ) by the input controller 100, the file server 200, the work station 300, and the image setter 400 and are then outputted (Step S21) as a galley proof by the laser beam printer 11. These information and data are checked by the human eye and subjected to a data correction (Step S22) by the use of the work station 300, and according to the necessity, an original for the modification is inputted by the input unit 1 (Step S4), The corrected data are transferred to the magnetic tape 210 or the hard discs 220, 221, ··· ··· and are stored thereon (Step S23). The final galley proof is outputted (Step S24) with respect to the stored and corrected data. Subsequently, an electronic pagination oputput is outputted (Step S25) by to the high quality image output unit 10 thereby applying a plate photo-composing, for instance, a four photo-composing of A4 size to obtain a print film, photosensitive paper and a printing mask plate (Step S31).

Each of the components and the operation of the system will be described hereinafter.

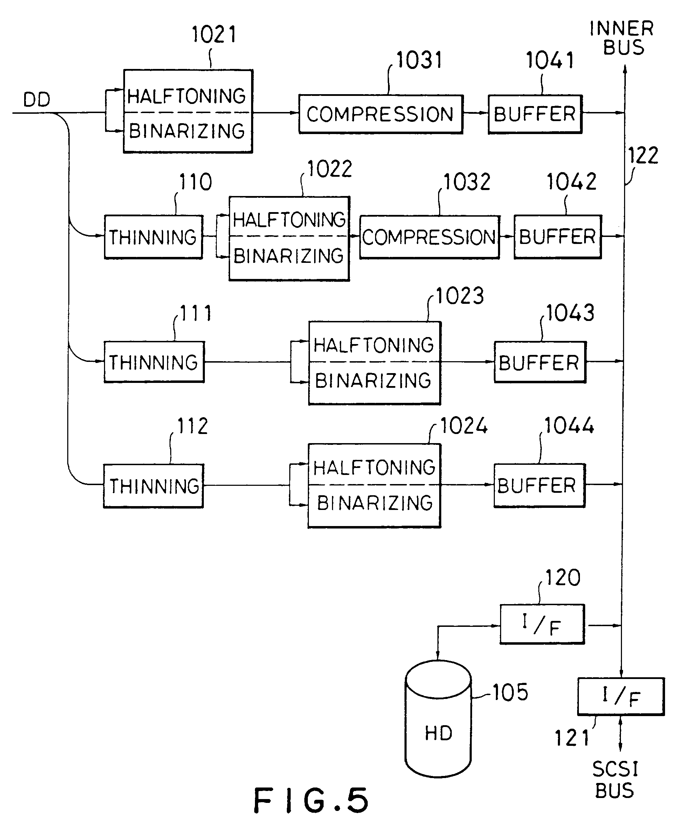

Now, the input controller 100 will be illustrated with reference to FIG.5. The input controller 100 is adapted to creatively process the density data DD inputted from the input unit 1 simultaneously with four sets of data which consist of high density data for the high quality image output unit 10, data for the laser beam printer 11, two types of data for displaying the CRT 301 of the work station 300. The data are subjected to such simultaneous processing in overlap manner to accelerate the speed so that the data forming operation load of the CPU 101 may be reduced by a hardware. The high density data for the high quality image output unit 10 is dotted by a halftoning circuit 1021 and data-compressed by a compression circuit 1031, the compressed data being held temporarily in a buffer 1041. In order to obtain data for allowing the laser beam printer 11 of relatively low quality image to output the image, the density data DD is thinned (110) at a predetermined distance ( for instance 1/3 ) , and then rough data is dotted by another halftoning circuit 1022 and compressed by another compression circuit 1032. The produced data is then temporarily held in another buffer 1042. Two types of rougher data for CRT 301 display are caused to thin the density data DD at a predetermined distance and are then dotted by different halftoning circuits 1023, 1024 and then temporarily held in different buffers 1043, 1044. In case of the CRT, the image is thinned at a predetermined rate by which the inputted image zone may be displayed at its maximum and at another predetermined rate by which the image is displayed in the form of one page layout.

It is noted that the buffers 1041 to 1044 are connected to an inner bus 122 and by an interface 121 to an SCSI bus, and that the halftoning circuits 1021, 1022, 1023 and 1024 function as binarization. A local disc 105 is connected by an interface 120 to the inner bus 122.

With this arrangement, the CPU 101 communicates with the input unit 1 by a data line (not shown) and also communicates through an auxiliary data line 4 and a dual port RAM (not shown) to the file server 200. When a data transmission request from the input unit 1 is made, the CPU 101 is caused to set the data required for the respective circuits as shown in FIG. 5. The set data are stored in the local disc 105 while a set point in association with sub-scanning is set. The density data DD from the input unit 1 are inputted every one line and stored in the buffers 104 ( 1041 to 1044 ) upon synchronization of the respective circuits shown in FIG.5. During the period of this time, the CPU 101 checks not only a changeover of the SCSI bus and of a data compressing output buffer 1041 but also a presence of error information from the respective circuits. The data once stored in the buffer 104 and the local disc 105 are sorted by the command of the CPU 101 and outputted to the SCSI bus from without. In this instance, the input controller 100 communicates with the file server 200 when the data are employed in on-line, resulting in provision of an address on the SCSI bus whereas the input controller 100 establishes a file control of the magnetic tape 210 when the data are used in off-line ( input controller 100 solely ).

Operation of the file server 200 will be apparent from the following description.

The file server 200 is fablicated in the manner as shown in FIGs. 3A and 3B and functions common file controls such as a file control and community of file, and control of network communication and communication between units. More specifically, the file server 200 passes through the SCSI bus to control the file for the hard discs 220, 221, ··· ··· , and the magnetic tape 210 and is caused through the Ethernet to provide function as a software interface for the work station 300. The file server 200 fulfills an utility function with respect to service for a file control information on the input controller 100 and the image setter 400 and with respect to a file control via the SCSI bus.

The file server 200 is adapted to perform service and store the data for transferring the data between the work station 300 and the input controller 100 and between the latter and the image setter 400. The input controller 100 serves to obtain required information on reservation or deletion of respective files from the auxiliary data line 4 and the dual port RAM. For the purpose of registering, the data which is once held in the buffer 104 in the input controller 100 as the file for the image processing system, informations on the file name, file capacity and the like are transferred to the file server 200 to allow the hard discs 220, 221,··· ··· on the SCSI bus access thereto. This will enable the file server 200 to communicate with a directory and to control a disc area and the like. The file server 200 is also adapted to transfer the file data by the Ethernet to the work station 300 and receive the data from the work station. At this moment, the file server 200 controls the hard discs 220, 221 ··· ··· on the SCSI bus and the magnetic tape 210 under the command of the work station 300 to renew information required for the directory and the like. As a result, the file server obtains the command over the image setter 400 and the other command over the magnetic tape 210, thereby performing service according to those commands. A predetermined command is issued by the auxiliary data line 5 and the dual port RAM to the image setter 400 whereas the file control information is sent upon request from the image setter 400 to allow the latter access to the disc data on the SCSI bus. Further, the utility information as to the image processing system as a whole is controlled by the hard discs 220, 221, ··· ··· on the SCSI bus and subjected to font information and common files and the like in the system.

In this connection, it is noted that an IBM-AT Ethernet board is used to facilitate a support ( TCP/IP protocol ) for the Ethernet. A fundamental configuration for driving such Ethernet board is similar to that of the IBM-AT and is actuated on an MS-DOS to readingly realize the TCP/IP protocol. The protocol is meant to refer to a communication rule established between hosts for communicating. A seven layer ISO ( International Organization for Standardization ) model has been suggested by the ISO.

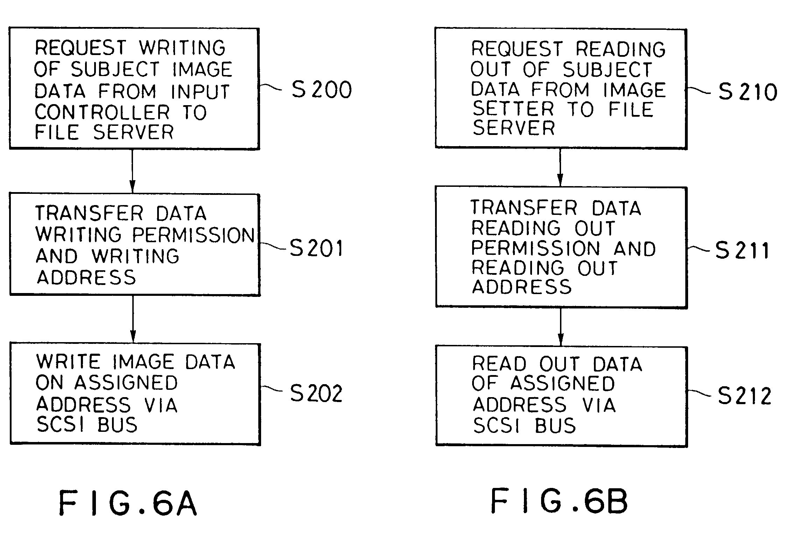

FIGs.6A and 6B show a manner in which communication is held between the file server 200 and the input controller 100 and between the file server 200 and the image setter 400. More specifically, if a writing request on a subject image data is made from the input controller 100 to the file server 200 (Step S200), the file server 200 transfers data writing permission and writing address for writing the data to the input controller 100 (Step S201). In this instance, when the file names are identical with each other and the hard disc is running at full capacity and so on, the data writing permission is not obtained. When the data writing permission and the writing address are transferred from the file server 200, the input controller 100 is caused to write the image data ( compressed density data ) via the SCSI bus on the assigned address of the hard discs 220, 221, ··· ··· or the magnetic tape 210 (Step S202). When data is read out of the magnetic tape 210 or the hard discs 220, 221 ··· ··· to transfer the data to the image setter 400, a reading out request for the subject data is made from the image setter 400 to the file server 200 (Step S210), thereby transferring data reading out permission and reading out address of the data to be read to the image setter (Step S211). The file server 200 is then allowed to read out the data of the assigned address via the SCSI bus and transfer the data to the image setter (Step S212).

The operation of the work station 300 will be detailed hereinafter.

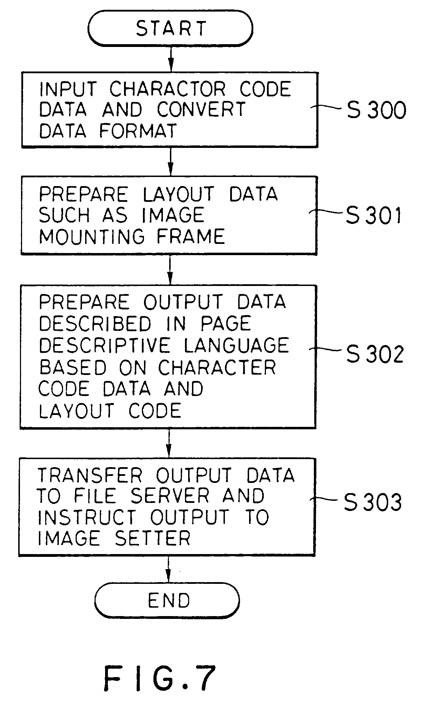

FIG.7 is a flow chart showing how the work station 300 function. The work station 300 is actuated to input image data from the file server 200 (Step S300) to interactively or batch-processingly prepare layout data such as an image mounting frame and the like (Step S301). Then, output data described in page descriptive languages are prepared based on the layout data (Step S302), and are transferred to the file server 200 to instruct the output to the image setter 400 via the file server 200 (Step S303).

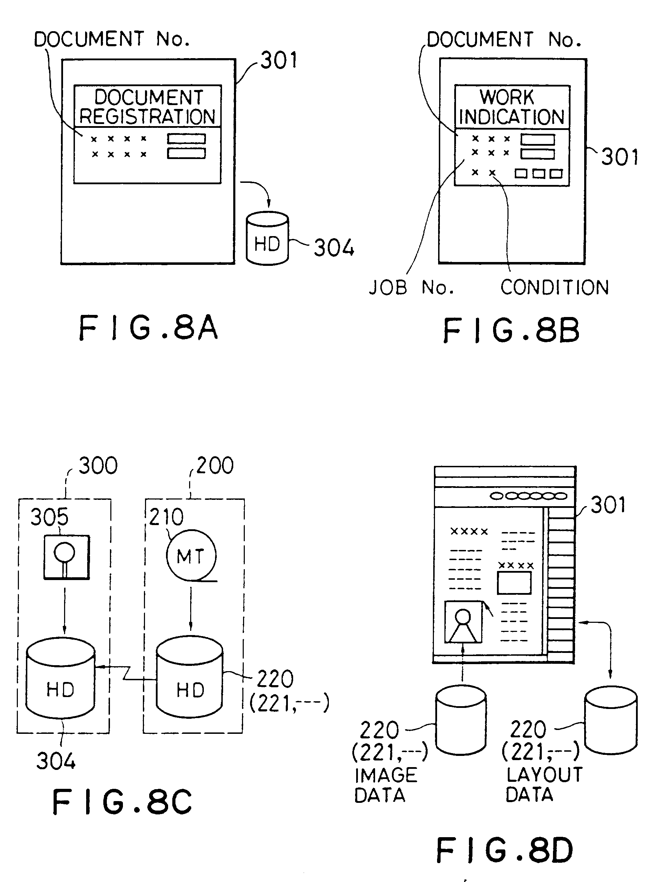

Next actual pictures displayed on the CRT 301 and the associated operation of the work station 300 will generally be described with respect to FIGs.8A through 8I.

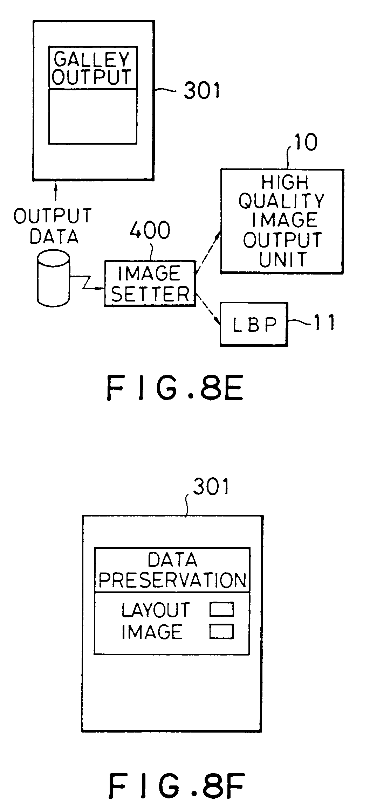

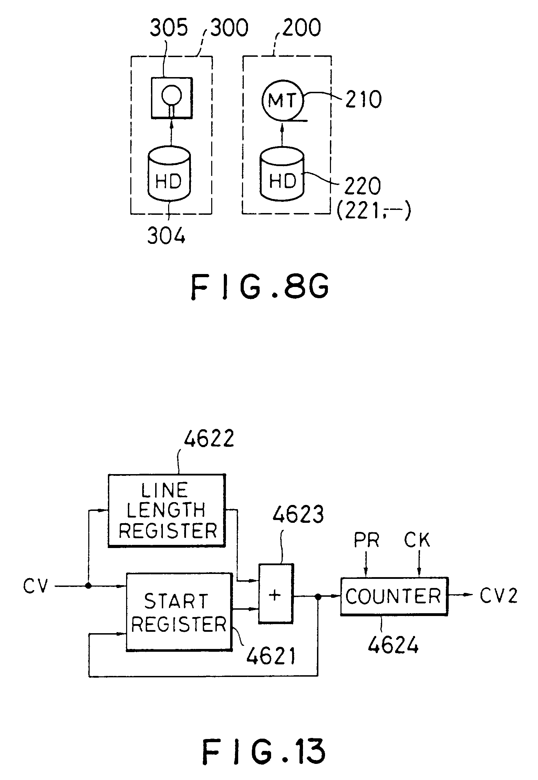

To perform editing work, preparation therefor starts with document registration. During the document registration, as shown in FIG.8A, the number and name of a document as well as such information on allocation pattern and the like are registered with aid of a document registration sheet displayed on the CRT 301 to be stored in the document management file inside the hard disc 304. This registration of the relevant information is initially made once each document. On the other hand, the editing work is effected by following such steps as initiation of the operation, preparation of operation, input and conversion of composition data, output of galley and/or block copy, and completion of the editing operation. To be more specific, the document number and job number are sequentially designated with the aid of such a work indication sheet displayed on the CRT as shown in FIG.8B, and then the initiation of the editing work is performed with the mouse 306. In addition, the mouse 306 is used to indicate, as working conditions, display of image, output of galley output of block copy, and addition or alteration of image. In accordance with the indicated working conditions, character or layout data ( floppy disc 305 ) and various kinds of image data ( the hard discs 220, 221,··· of the file server 200 or the magnetic tape 210 ) are loaded in the hard disc 304, as shown in FIG.8C. The series of the above processing is started as a background job and is processed in an overlapping manner, and a layout scope for editing work is displayed upon completion of data loading. Subsequently, as shown in FIG. 8D, the page to be editted is designated, and the contents thereof are then displayed. After a frame is designated, designation of the line(s), pattern(s) and tint is also made. In other words, the number of pages to be edited is directly or indirectly ( next, previous ) designated using the layout scope, and in a case where the page to be edited is already present, the image and layout are displayed on the CRT 301 in the form of WYSIWYG which stands for " What You See Is What You Get " and means that you can obtain a hard copy of what is displayed on the CRT 301 ) . An area in which images are displayed is called a frame, and this frame is configured by means of the pointing of the mouse 306 or of the operation the keyboard 302 selecting a number of commands displayed on the CRT 301 and then displaying input on the CRT 301 in the form of WYSIWYG. Subsequently, the image number to be put in the frame is designated by means of the keyboard 302, and the image data stored in the hard disc 220, ··· is displayed on the CRT 301 by giving a re-display command and the like. In addition to this, rules, enclosing rules, tint and the like are formed by means of the mouse 306 or the keyboard 302 selecting the numbers of various kinds of commands displayed on the CRT 301 and displaying them on the CRT 301 in the form of WYSIWYG. Following this, the designation of the page to be outputted, the number of copies to be made and the like is effected with the aid of a galley or a block copy output sheet as shown in FIG.8E, indication of the required output thus being effected. The editing data ( character data and layout data ) are automatically converted to the output data in the form of page description data, which are then stored in the hard discs 220, 221, ···, and then stored output data are outputted from the high quality image output unit 10 or the laser beam printer 11 via the image setter 400. The page description data are the form of indication used to indicate the graph drawing and image output. With the graph drawing, it is possible to give indications to such factors as drawing rules of arbitrary size and length, drawing circles, arcs and ellipses and the tint processing within the area. With the image output, it is possible to give indications to output the image data which are inputted by means of the input controller 100 and kept in the hard disc ( 220, ··· ) at arbitrary positions with arbitrary trimming effected thereon. Thus the characters, the graphs and the images can be disposed at arbitrary positions by utilizing these two types of indication commands. In this case, as will be explained hereinafter, this output processing is started as a background job, and a plurality of requests for output therefrom are put in the output queue of the image setter 400. There being only one CPU, various requests made during the process with respect to hardware or software have to be registered in order. With a view to dealing with this, the output queue is used to keep the requests waiting in order for processing. Finally, the indication of preservation forms for the character, the layout and image data are effected with the aid of a data preservation sheet which is displayed on the CRT 301 when the preservation and the completion is indicated, and in accordance with the preservation forms so indicated as shown in FIGs.8F and 8G, the layout data, or various image data are, respectively is stored in the floppy disc 305 and the hard discs 220, 221, ··· of the file server 200 or the magnetic tape 210. Subsequently, when an ending indication of the editing work is effected with the aid of the work indication sheet, every processing is terminated, with the processing queue being left as they are, and finally the power supply is cut off.

Next, the detailed configuration of the image setter 400 and the action thereof will now be described.

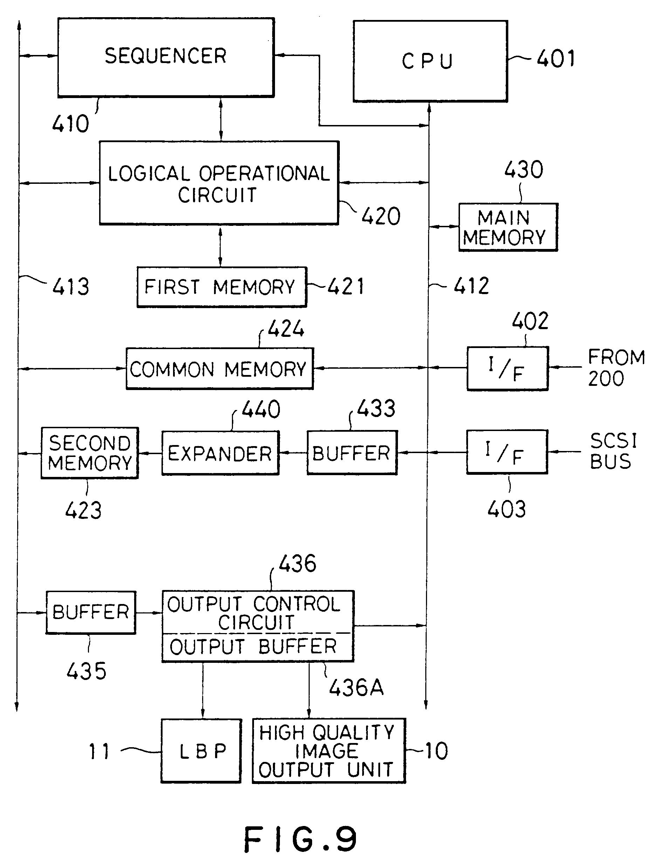

FIG.9 shows in detail an example of the configurations of the image setter 400. The CPU 401 and an image data bus 413 are connected to the sequencer 410, and a logical operational circuit 420 and a first memory 421 are also connected to the same sequencer 410. In addition, a main memory 430 for the CPU 401 is connected to the CPU bus 412, and a common memory 424 is disposed between the two buses 412 and 413 so as to connect the former to the latter, the output from the interfaces 402 and 403 being inputted into the CPU bus 412. A buffer 433, an expander 440 and a second memory 423 are connected to each other in that order between the CPU bus 412 and the image data bus 413, and the high quality image output unit 10 and the laser beam printer 11 are respectively connected to the output control circuit 436 via an output buffer 436A.

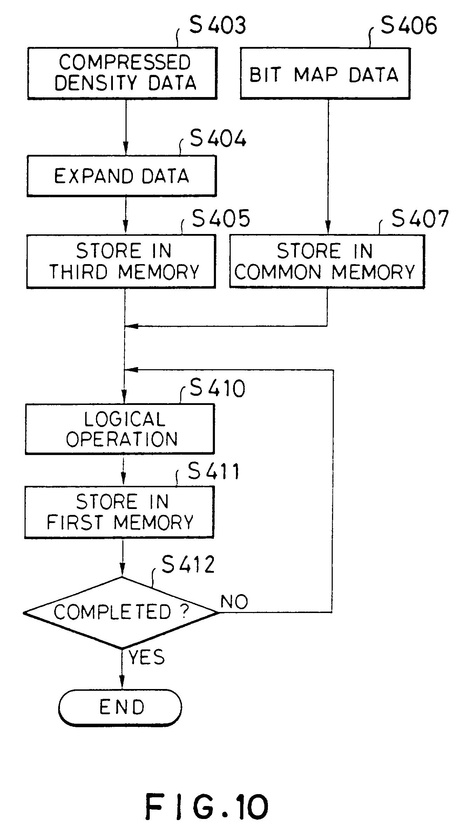

In this arrangement the operation of the image setter 400 which is configured as described above is shown in FIG.10. A request for output indication is outputted from the file server 200 to the image setter 400 by using a file name stored in the hard discs 220, 221,··· as a parameter. The specification to be outputted is written in the file. While sequentially decoding this specification, address computation of coded data and compressed data is performed relative to every image unit, and the overlapping processing by the logical operation is repeated relative to the address, the results of the processing then being stored in the first memory 421. Calling the parameter file via the SCSI bus, the image setter 400 repeats this operation. The data-compressed image data are sent by way of the SCSI bus and are inputted via the interface 403 (Step S403) , and the data are sent by way of the buffer 433 and are expanded by an expander 440 to be reproduced (Step S404) , the reproduced image data then being stored in the second memory 423 (Step S405) . Moreover, the bit map data such as logotypes and the like which are stored in the hard discs 220, 221, ··· are inputted via the interface 403 (Step S406) and are stored in the common memory 424 (Step S407). All data stored in the second memory 423 through the common memory 424 are the bit map data, and the logical operation of these stored data is performed via the CPU 401 (Step S410), the data which are so logically operated as to synthesize, edit or image-process pictures, documents or the like are stored in the first memory 421 (Step S411). After the data have been stored in the first memory 421, judgement of whether the editing work is to be completed or not, in other words, whether or not there will be further additions or modifications to be made, is made (Step S412), and this operation of judgement continues until logical operation of modification or the like has been completed. This logical operational circuit 420 effects in cooperation with the CPU 401 logical operation of the bit map data generated from coded data, i.e. characters or the like, the bit map data obtained by expanding the compressed image data and the "sum", product", "difference", "exclusive or" and the like of the bit maps, and generates image information to be outputted via the output unit 10 or the laser beam printer 11.

The CPU 401 is designed to input information regarding the layout indication from the hard discs 220, 221,··· ···, and to pass information regarding setting the transfer area to the second memory 423 through the common memory 424 and to the logical operationLal circuit 420 as well as to transmit timing signals to the expander 440.

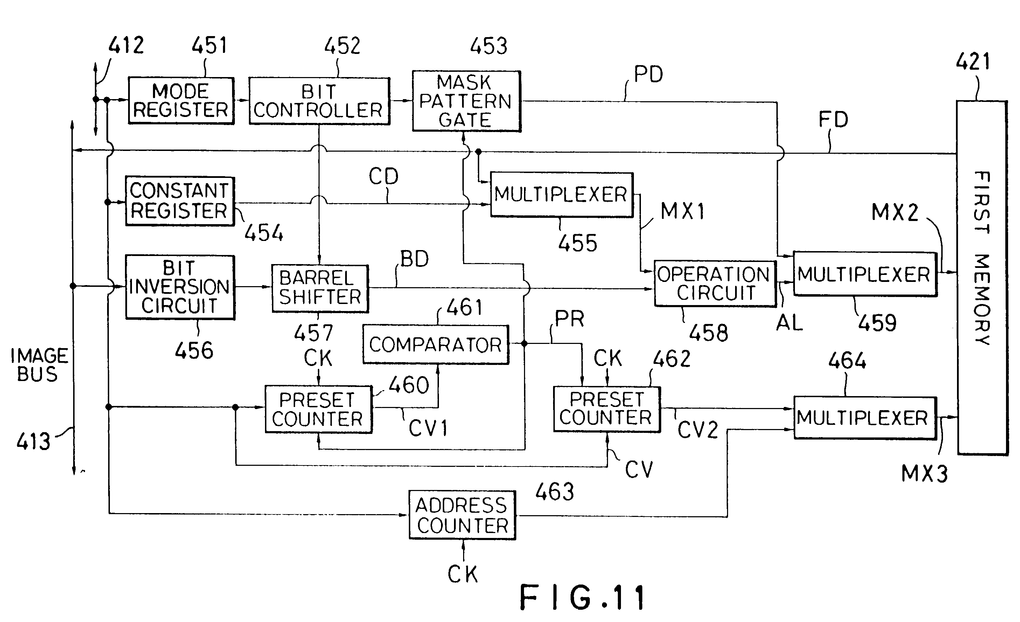

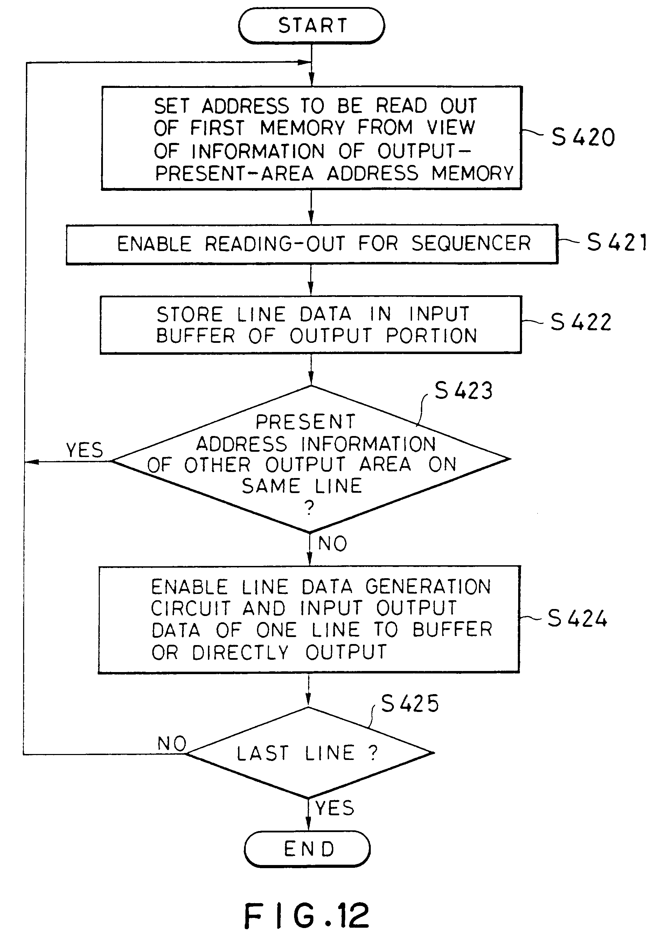

FIG.11 shows in more detail the circuit configuration of the logical operational circuit 420, and an example of the operation thereof will be explained with reference to FIG.12.

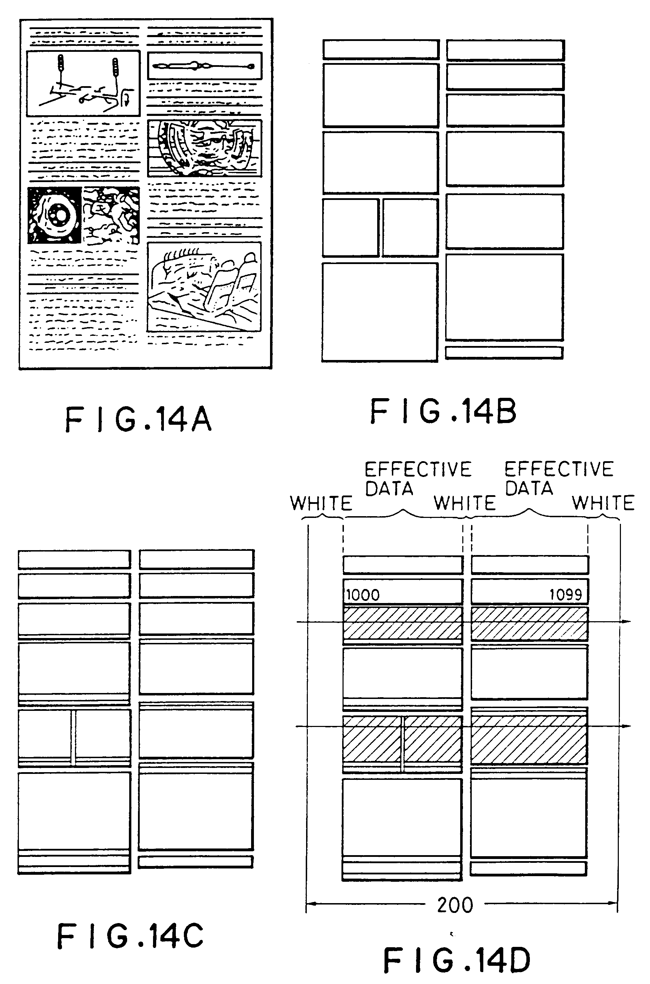

The data transferred via the CPU bus 412 are inputted into a mode register 451, a constant register 454, preset counters 460 and 462 and an address counter 463. The output from the mode register 451 is inputted into a bit controller 452, which is designed to enable a barrel shifter 457 for performing high-speed shift. The output from the address counter 463 is inputted into a multiplexer 464. In addition, the output from the bit controller 452 is inputted into a mask pattern gate 453 for outputting regular-shaped data, and the output from the mask pattern gate 453 is inputted into a multiplexer 459 as well as a comparater 461. The constant data from the constant register 454 is inputted into a multiplexer 455. The data FD read out of the first memory 421 is transferred to an operation bus as well as the multiplexer 455, and the output MX1 from the multiplexer 455 is, together with the output data BD from the barrel shifter 457, inputted into an operation circuit 458 which effects logical operation. The operated output AL from the operation circuit 458 is inputted into the multiplexer 459, and the output MX2 therefrom is inputted into the first memory 421 to be stored therein. When it cannot complete data to a word unit, the multiplexer 459 writes them and uses bits needed to effect writing after generating bit patterns by means of mask patterns. The data transferred from the image bus 413 is inputted into the barrel shifter 457 after the LSB and MSB thereof are inverted at a bit inversion circuit 456 depending upon necessity ( for instance, in the case of an inverted display due to multiplication ), and the output MX3 from the multiplexer 464 is inputted into the first memory 421 as an address command and is stored therein. The preset counters 460 and 462 count the clock pulse CK and are designed to cause the comparator 461 to output a count-preset-enable signal PR when the preset counter 460 counts up to a given value ( for instance, the preset value or "0" ) , the count-preset-enable signal being already in the preset counters 460 and 462. As shown in detail in FIG.13, the preset counter 462 comprises a start register 4621, a line length register 4622 for setting line length data, an adder 4623 for adding the respective values of the start register 4621 and the line length register 4622, and a counter 4624. Access to the memory is normally effected every 16 bits as a unit. However, since the present invention uses the bit map data, if data are written every 16 bits, the data will be written at improper bit positions. In addition, in a case where the address position of a source is different from that of a destination, it is impossible to write data at proper positions unless bit positions are shifted. The barrel shifter 457 and the mask pattern gate 453 are used for this purpose.

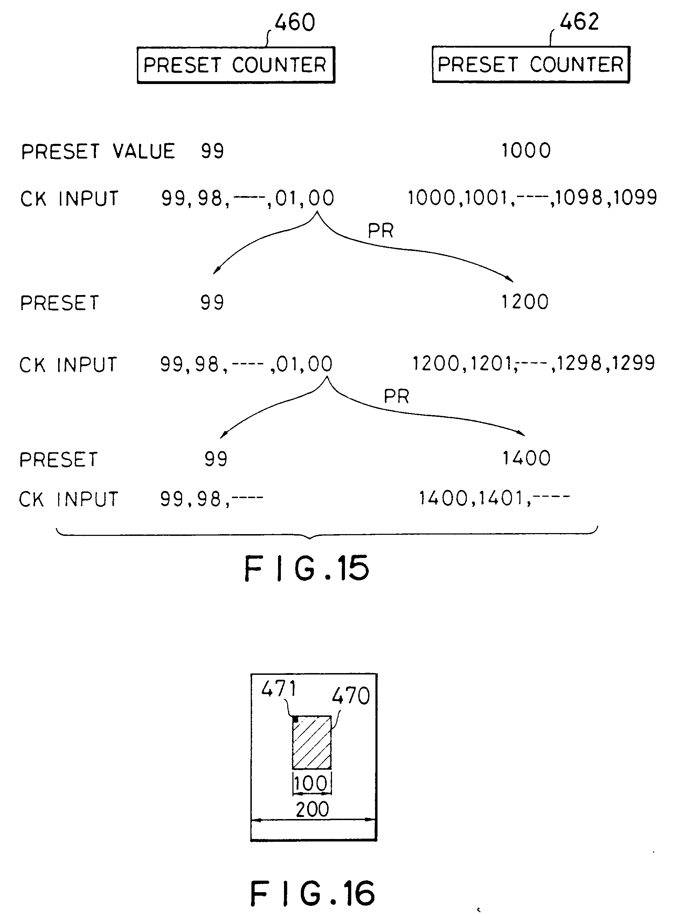

In this configuration, storing data in the first memory 421 is effected by storing the results of operation in a designated address using the output MX3 from the multiplexer 464 as address data. The preset data from the CPU bus 412 are inputted into the preset counters 460 and 462, and in a case where the relationship between the output line and effective data resembles one shown in FIG.14D, the preset counters 460 and 462 are, as shown in FIG.15. preset at "99" and "1000", respectively. The preset counter 460 counts the clock pulse CK in a count-down manner, while the preset counter 462 counts the clock pulse CK in a count-up manner. When the preset counter 460 counts to "0", the comparator 461 is designed to output a count-up signal CR, and the preset counter 460 is preset again at "99", while the preset counter 462 is preset at "1200", similar operations being repeated thereafter. In other words, when an image shown as an area 470 in FIG.16 is written in the first memory 421, the start register 4621 is first initialized at "-200 which is the value indicating the data position of a point 471", with the line length register 4622 being set at "200". The preset counter 460 is preset at "100", and the preset counter 462 is preset at "1400", and the clock pulse CK is inputted. When the clock pulse CK is counted up to "100", the comparator 461 outputs the count-up signal CR, and the counter 4624 is set at the value representing the point 471, in other words, at "+200" which represents the head address one line before. The clock pulse CK is inputted, and operations similar to this are repeated thereafter. The output from the preset counter 462 is selected by the multiplexer 464 and is inputted into the first memory 421 as the address data MX3. The data FD read out of the first memory 421 by means of this address are inputted into the multiplexer 455, and the multiplexer 455 outputs either the data FD or the constant data CD from the constant register 454. The output MX1 from the multiplexer 455 is inputted into the operation circuit 458. The data transferred from the operation bus via the bit inversion circuit 456 and the barrel shifter 457 are already in this operation circuit 458, and the operated data AL of the operation circuit 458 are inputted into the multiplexer 459. The pattern data PD from the mask pattern gate 453 are already in the multiplexer 459, and either of these data are selected for output therefrom as the output data MX2, which are stored in the first memory 421. This type of operation of data and storage of data in the first memory is effected word by word. In addition, in a case where the data is read out of the first memory 421, the initial value passed from the CPU bus 412 every line is set in the address counter 463, and address renewal is effected by means of a clock, and the output values are selected by the multiplexer 464 for effecting addressing. The data designated by the address of the output MX3 from the multiplexer 464 are read out of the first memory 421 for transfer to the operation bus.

First, the sequencer 410 is set at the address to be read out of the first memory 421 after viewing the information ( this information is created by the CPU 401 and is passed in advance to the output control circuit 436 via the CPU bus 412 to be stored therein ) of an output-present-area address memory in the output control circuit 436 (Step S420) so as to enable reading-out operation for the sequencer 410 (Step S421). Subsequently, the data on the relevant line is stored in the input buffer 435 of the output portion (Step S422), and judgement is made as to whether or not the address information belonging to other output areas is present on the same line (Step S423). In the event that the address information belonging to other output areas is not present in the same line, a line data generation circuit inside the output control circuit 436 is enabaled to input into the output buffer 436A the output data corresponding to the quantity of one line (Step S424), this operation being repeated until processing of the last of the lines is completed. Each unit of the image setter 400 is started in a parallel or sequential manner by means of the CPU 401, and this results in the fact that access to the first memory 421, output of data from the output control circuit 436, conversion of raster images and the like are effected in a time-sharing manner. The output-present-area memory only stores data like one representing the area 470 shown in FIG.16, and a blank area surrounding such an image area acts as a white or black area for interpolating the data.

FIG.14A shows a document containing information equivalent in quantity to that to be outputted as one page. FIG.14B shows bit map data needed to output the information shown in FIG.14A, wherein the respective rectangles represent bit map data secured in the memory area ( the first memory 421 ). A bit map corresponding to one rectangle corresponds to the continuous memory area, but no relationship in terms of memory is present in the portions of the memory area which correspond to gaps formed between the respective ractangles. FIG.14C shows a state in which the bit map area of FIG.14B which is separated in the transverse direction ( block separation ) in order to produce the output-present-area address, and this causes all lines in one block to have the same effective data position and length. FIG.14D shows, respectively, portions necessary ( effective data ) and portion unnecessary ( white data ) to be read out of the first memory 421 by means of the sequencer 410 when the output data corresponding to a quantity of one line is inputted into the output buffer 436A in the output control circuit 436 or is directly outputted therefrom. In the portions corresponding to the oblique line-given portions, the data are read out of the first memory 421 by the sequencer 410.

Finally, the operation of the system in the present invention will be explained by referring to an example of actual block copy composition.

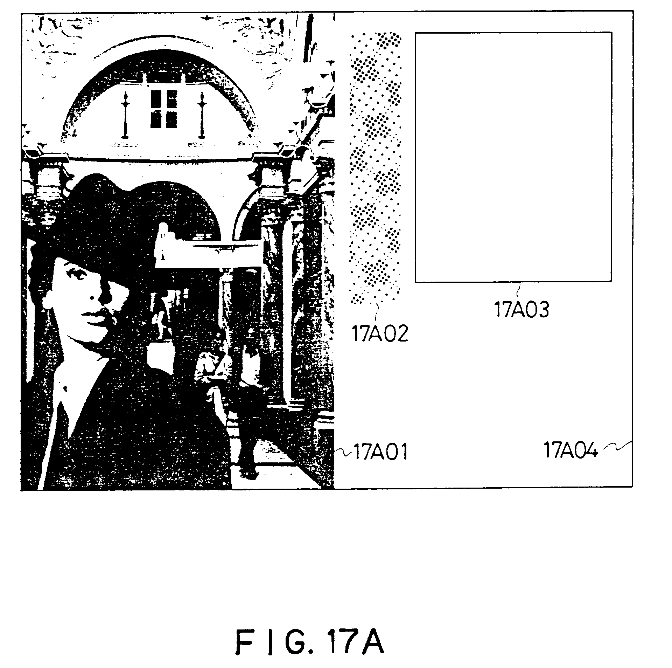

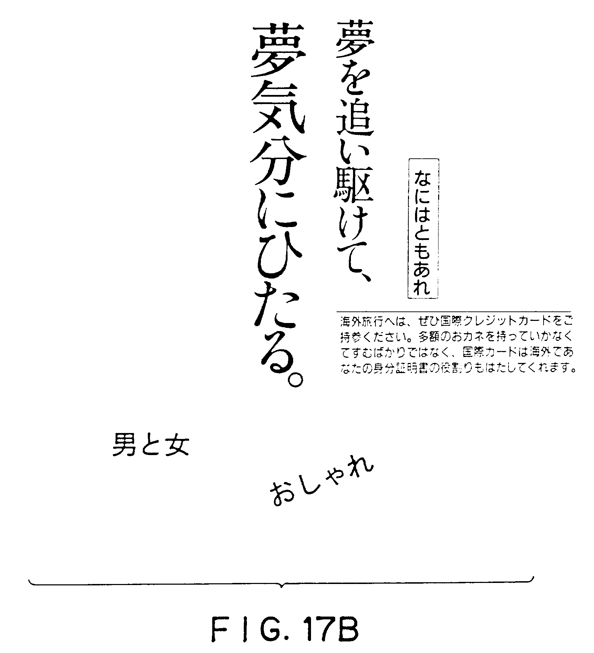

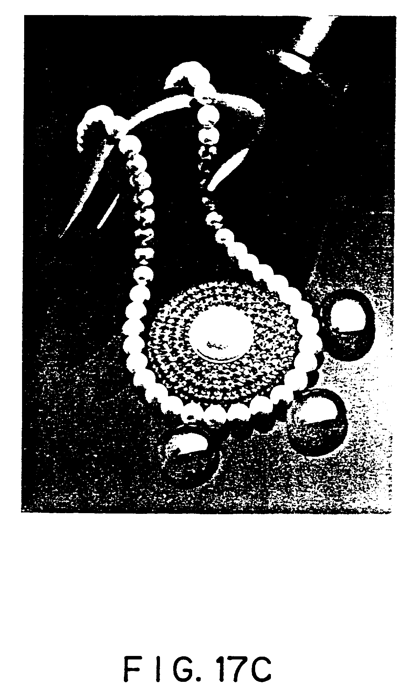

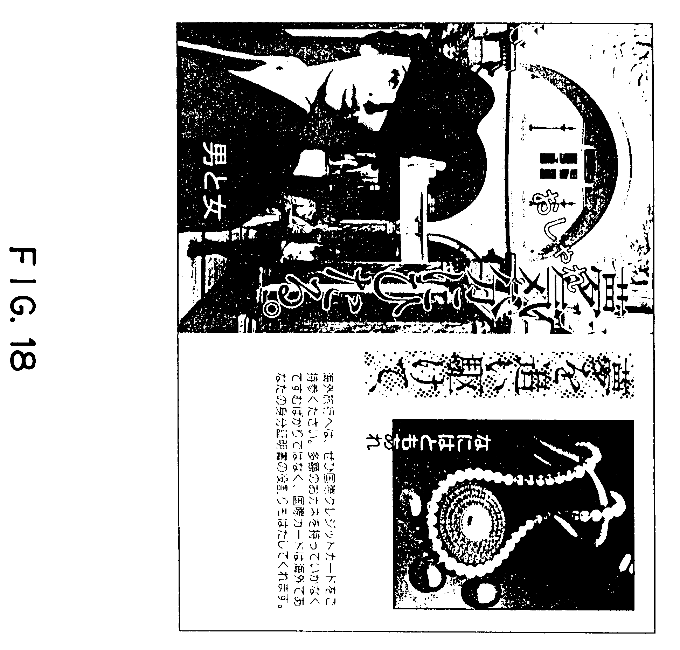

Originals to be inputted are shown in FIGs.17A, 17B and 17C and FIG.18 shows a block copy to be outputted by the laser beam printer 11 for output or the high quality image output unit 10. In this example, the input unit 1, the laser beam printer 11 for output and the high quality image output unit 10 each has a respective solution of 1200DPI, 400DPI and 1200 DPI. FIG.17A shows a halftoned image 17A01 being pasted up on a rough layout board as well as a shading pattern 17A02. In addition, a frame to be an unruled perimeter 17A03 and a ruled frame 17A04 are drawn on the layout board. FIG.17B shows an original of characters for making a block copy being pasted up. Each a part of character originals is processed and composed in the block copy on the image shown FIG.17A. A photograph to be fit in to the layout frame 17A03 of FIG.17A is shown in FIG.17C.

An operator, at first inputs the originals of FIGs.17A and 17B to have proper sizes respectively as line drawings, using the input unit 1. By this scanning operation, image files for a compressed image via the input controller 100 and for a CRT display image are prepared in the file server 200. In addition, when the instructions for halftoning and sizing the original photograph shown in FIG.17C is inputted from the input unit 1, the compressed image file and the CRT display image file are prepared in the file server 200 in a similar manner of the line drawing originals of FIGs. 17A and 17B. When inputting images via the input unit 1 to the file server 200, the operator may designate the image file number for indicating image names, so that for example, "10001, 10002, 10003" may respectively correspond to FIGs.17A, 17B and 17C.

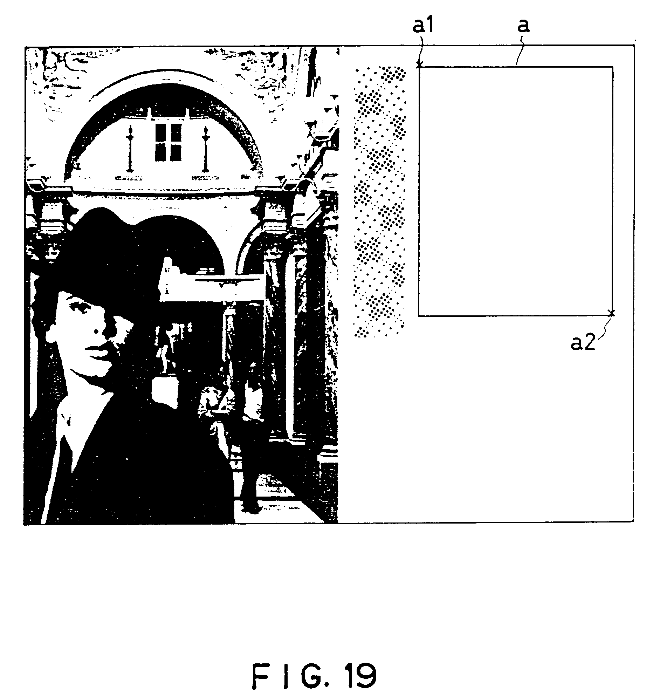

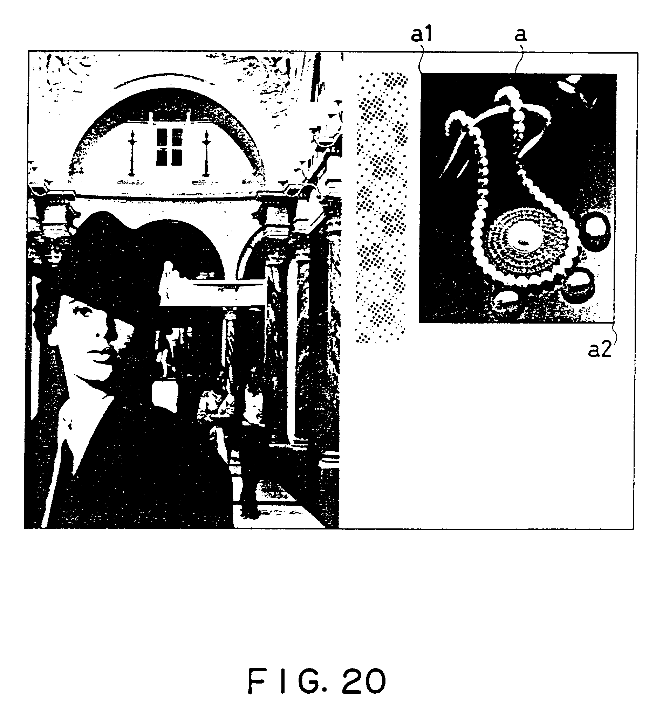

These images "10001, 10002, 10003" in the file server 200 for composing a block copy are transferred to the work station 300, which is already in the state for editing ( the series of these images involved can be registered with a document number when scanned by means of the input unit 1 ). Next, the display on the CRT 301 of the image of FIG.17A, or in other word the image "10001" is instructed by the operator so as to effect composition and layout on the work station 300, then an image as shown in FIG.19 is displayed. On the basis of image on the CRT 301 regions for photographs or characters are designated, for example, the frame a in the FIG.19 is defined on the display image as unruled perimeter. The figure of the region a may be possibly designated to be a circle, a rectangle or the like. In this case, the layout instruction indicate it to be a rectangle, so the operator must indicate a pair of point a₁ and a₂ by means of the mouse 306, and instruct attributes of an unruled perimeter and an opaque against the original layout board. Subsequently, the image No "10003" of the image to be fit for this region is designated so that the layout for the block copy output may instruct the photograph file "10003" to fit into layout file of "10001". FIG.20 shows the display of this composition on the CRT 301. It is noted that in this process the position of the photograph image "10003" can be, if required, trimmed to some degree in vertical or horizontal direction by use of the mouse 306.

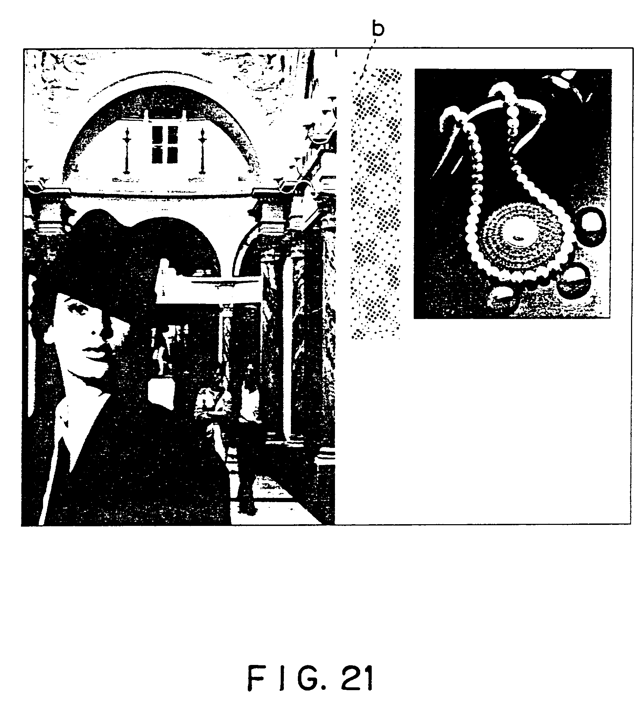

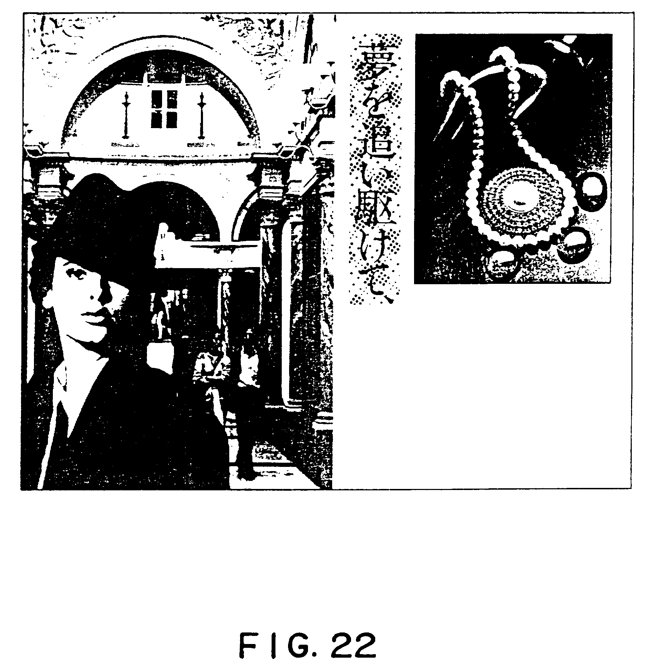

The operation for composing " 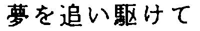 (YUME WO OIKAKETE in Japanese )" onto shading pattern 17A02 will be explained. A region frame b as shown in FIG.21 is defined by the mouse 306 and designated to have the attribute of transparent. The image file "10002" is adapted to fit into the frame b, while the region frame b is designated to be an unruled perimeter, this displaying an image as shown in FIG.22 on the CRT 301. The word " 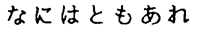 (NANIWA TOMOAE in Japanese)" can be also fit into the frame b by trimming the position of the image "10002". When being instructed to carry out a galley proof output or a block copy output, the work station 300 prepares a page description data from the layout instruction already performed and transfers an instruction file for output to the image setter 400. The image setter 400 expand the compressed image "10001, 10002, 10003" to the bit map data on the basis of the page description data to output a galley proof or a film image having a same pattern as shown in FIG.22.

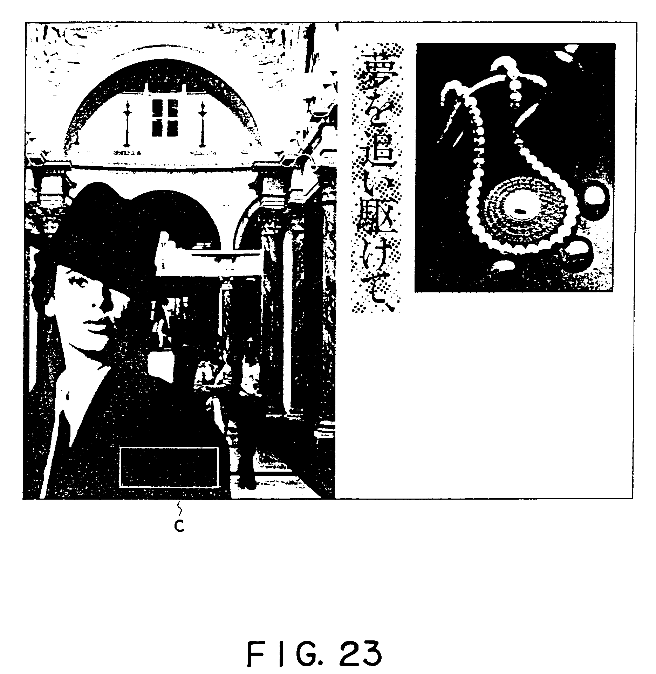

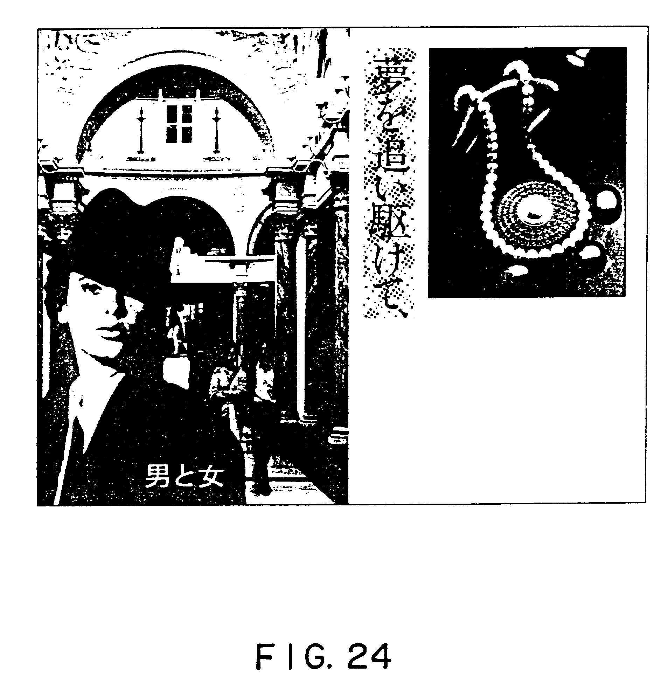

In FIG.23, a numeral c shows the manner that the frame is taken for preparing the halftoned characters " 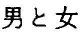 (OTOKO TO ON-NA in Japanese)" at the bottom of the halftoned image 17A01 by using work station 300. The attribute for this rectangle region frame c is designated as transparent and unruled perimeter then the image file "10002" is trimmed and fit into the region c while the characters are instructed to be halftoned for the image processing of the region c. After these processes, the CRT 301 display an image as shwon in FIG.24. In a similar manner, a block copy for print can be preapared by the process including the steps of designating on the image of the CRT a region for another image to be fit in, instructing the attribute of the region such as transparent or opaque and presence of the ruled perimeter, trimming the other image, fitting the illustrated characters in the region, and designating the printing mode such as a tint, an outline, a reverse, a reversed out line and a shadow for the region. Each of the characters such as " 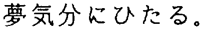 (YUME KINBUN NI HITARU. in Japanese) " , " 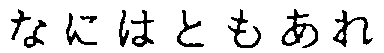 (NANIWA TOMOARE in Japanese)", " 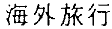 ··· ··· (KAIGAI RYOKOU ··· ··· in Japanese)" in FIG.17B is also similarly processed to be fit in as an image. Further, in the case of " 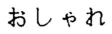 (OSHARE in Japanese) " , after completing the process which prepares " 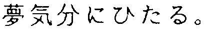 (YUME KIBUN NI HITARU. in Japanese)" of the reversed out line characters on the layout board, an inclined rectangle area is designated, in which the image "10002" is trimmed to be fit and the characters are designated to be an outline. In this way the block copy as shown in FIG.18 can be obtained.

In the manner described above, even if an original is in the form of character, it is scanned as an image, and is processed and composed after filing, thus making it possible to prepare a block copy for printing without processing the font. In the embodiment aforementioned the character processing is carried out on the image inserted into the region frame which is newly established, the work station 300 in this invention, however is also adapted to be able to give instruction for the character processing to the image which is hidden or overlapped by the newly formed image. This is because the image setter 400 can find the area to be subjected to the character processing by effecting an address conversion of the image already output-instructed as simply regarding as an area for the newly formed region.

In addition the designated area for composition processing is only screened without any image being fitted in, subsequently the plain screening can be carried out in the shape that is designated. In the example above, the newly processing region is defined by means of the mouse, however if it is required to obtained an exact coordinate on the image, the keyboard can be used for inputting the numeral.

For another application of the present system, when the input unit is directly jointed to the high quality output unit 10 via the switching devices as shown in FIGs.3A and 3B, only a halftone image can be prepared on the photographic paper. Then pasting up this paper on the roughly-drawn layout board, an operator or a craftman can in a little while prepare such as an original as shown in FIG.17A of the embodiment. In addition, the system is provided with the switching devices so that the operation for the layout composition which takes rather a long time, can be carried out independently with the input unit 1 and the high quality output unit 10 being separated, thus resulting in effective us for the system. Further, in the example above-mentioned, although all required image originals are provided, the layout composition in the work station 300 can be done unless all originals are prepared. In spite of lacking for a photograph, for example, the layout instruction is once completed using a dummy image file name, then an image to be used actually can be inputted by means of the dummy image file name. Moreover, because a new region designation can be easily effected on the CRT display, the amendment for the character part, if necessary, can be performed by cutting out image already stored in the file server 200 and fitting it in already output-instructed image as a correction content. The large part of modification, is cope with a manner that the image of modification part is re-scanned by the input unit 1.

According to the image processing system of the present invention configurated above, characters, illustrations, patterns, photographs ( or images with gradation ) all of these are scanned by means of the input unit, and can be composed and laid out on the CRT display, to thereby provide a system suitable for the existing block copy production. Even if the system does not have fonts, the system can substitute characters scanned via the input unit with fonts to carry out a modification or a correction of the image. Since this system can independently perform each operation of an image input, an edit instruction on the CRT and an output in a film, it is possible to shorten the operation time, and to operate the system in a overlap manner with mannual works so as to provide an excellent system for the printing traders who are forced to complete until date of the delivery. In addition, because the image composing instruction on the image of the CRT is basically carried out by designating the region on the image to be fit in, it is possible to easily instruct such as character processing, thus providing an exact composing process including the picture and picture, the character and picture, the plain screen and the like which are frequently used for producing a block copy for printing. The layout for the block copy can be also instructed by the roughly-made layout so that in the case where all originals are not prepared, the operation up to the inter-processing state such as inputting a photograph, designating a position for the photograph or the like can be carried out. Of course, it is also possible easily to delete needless descriptions on the original by making use of the region overlapping. By this deleting method, the color separation for characters or chart or multi-color printing matters can be easily effected. It is possible to output a film for producing a printing mask plate composed with all images as a final output, and it is also possible to output partial images ( in the state of inter processing instruction ) to a printing paper, to thereby greatly reduce the loss of the photosensitive materials. In addition, the overlapping operation of images and the layout have been carried out by repeating the operation of the exposure, developing and the like up to the present, however in this system the logical operation is applied in the image setter, thus making it possible to perform the image processing more rapidly than that in the prior art.

## Claims

1. An image processing system comprising:
an input unit (1) for reading an original image and generating image data corresponding to the read original image;
a file server (200) for storing data including image files corresponding to the generated image data;
an input controller (100) for storing data read by said input unit (1) in the file server (200);
a work station (300) for displaying the stored image and for processing the image files.
an image setter (400) for image processing the image files displayed on the work station (300), said image setter (400) comprising a first memory (421) for storing image data, and an addressing multiplexer (464), wherein an output of said addressing multiplexer (464) is connected to the first memory (421) for identifying addresses of the image data to be read from and stored in the first memory (421);
a medium-quality image output unit (11) for outputting a galley proof, said galley proof outputted from said medium-quality image output unit (11) being a plain paper output for brief previewing a final output appearance on a block copy; and
a high-quality image output unit (10) for outputting image data transferred from the image setter (400) as the block copy to be outputted, wherein said block copy outputted from the high-quality image output unit (10) is a film output for forming a printing plate, said image setter (400) produces the block copy in accordance with the following operations:
defining in said working station (300) an output ruled frame having the size of the block copy and the galley proof;
defining a first layout frame according to the features of the block copy within said ruled frame and fitting therein an image represented by an image file stored in the file server (200) to produce an output processing instruction image;
defining a second layout frame according to the features of the block copy within said ruled frame;
performing a predetermined image processing with respect to the first and second layout frames to form a layout instruction;
composing an output instruction image for the block copy and the galley proof by preparing page description data from the layout instruction; and
transferring an instruction file containing the layout instruction to said image setter (400) to produce the block copy or the galley proof;
wherein a result of an output processing instruction image is roughly displayed on a display portion of said work station (200), a description for image processing is displayed as comment lines on the display portion and wherein a successive processing area can be designated with a mouse (306) and with a keyboard (302).

2. An image processing system as claimed in claim 1, wherein said image setter (400) uses at least one of the following processes for the image processing:
1) a process capable of designating a rectangle, a circle, and ellipse, a polygon, a section or the like as a shape of said region and instructing the presence of the perimetric rule;
2) a process capable of designating a data of whether said region is transparent or opaque;
3) a process,capable of trimming and setting the read image data stored in said file server (200) to said region;
4) a process carrying out a logical operation between an image data within said region and an image data which had been assigned immediately before processing within an area on an output processing instruction image;
5) a process cutting out an area of an output processing instruction image assigned immediately before the processing in accordance with said region and transferring it to a work buffer memory;
6) a process fitting an image data staying in the work buffer memory into said region;
7) a process tint-laying or shading on said region or an area of output processing image in accordance therewith; or
8) a process preparing characters for printing such as reverse, shadow, outline and the like in said region or an area of output processing image in accordance therewith.

3. An image processing system as claimed in claim 1, wherein an output image for said block copy is prepared by expanding file data for the high-quality image output unit (10) which is compressed and stored in said file server (200).

4. An image processing system as claimed in claim 1, further including:
a changeover means for switching a connection of said input unit (1) between a direct connection to said high-quality image output unit (10) and an editing connection for storing the image data in a input controller (100) and said file server (200), for editing the data in said work station (300), for processing the data in said image setter (400) and for outputting the data to said high-quality image output unit (10) or to said medium-quality image output unit (11).

5. An image processing system as claimed in claim 1, wherein said image setter (400) further comprises:
a first memory (421) for storing output image data,
a second memory (423) for storing expanded image data,
a common memory (424) for storing bit map data, and
a logical operation circuit (458) for receiving said bit map data and image data and performing logical operations thereon to produce output image data stored in said first memory (421).

6. An image processing system as claimed in claim 1, wherein said image setter (200) further performs the following operations:
storing image and bit map data in a first memory (421) after editing said image data in the image setter (400);
judging whether or not modification to the edited data are to be made; and
outputting completely edited data as the block copy and galley proof.

7. An image processing system as claimed in claim 1, further including:
an input means for inputting data transferred via a CPU bus (412) to a mode register (451), and constant register (454), and first and second counters (460,462),
a high speed shifting means for performing high speed shifting in a barrel shifter (457), upon the image data output according to the mode register (451),
an addressing means for addressing image data locations in the first memory (421) through a first multiplexer (464),
an outputting means for outputting regular shape data from a mask pattern gate (453) based on and output from a bit controller (452), and
a supplying means for supplying image data to the first memory (421) by supplying the output of the pattern mask gate (453) to the first memory (421) through a second multiplexer (459).

## Patentansprüche

1. Bildverarbeitungssystem mit
einer Eingabeeinheit (1) für das Lesen eines Originalbildes und die Erzeugung von Bilddaten, die dem gelesenen Originalbild entsprechen,
einem Dateiserver (200) für das Speichern der Daten, einschließlich der Bilddateien, die den erzeugten Bilddaten entsprechen,
einer Eingabesteuereinheit (100) für das Speichern der von der genannten Eingabeeinheit (1) gelesenen Daten in dem Dateiserver (200),
einer Workstation (300) für das Anzeigen der gespeicherten Daten und für die Verarbeitung der Bilddateien,
einer Bildeinrichtungseinheit (400) für die Bildverarbeitung der an der Workstation (300) angezeigten Bilddateien, wobei die genannte Bildeinrichtungseinheit (400) einen ersten Speicher (421) für das Speichern von Bilddaten und einen adressierenden Multiplexer (464) umfaßt, wobei ein Ausgang des genannten adressierenden Multiplexers (464) mit dem ersten Speicher (421) verbunden ist, um Adressen für die Bilddaten zu identifizieren, die aus dem ersten Speicher (421) ausgelesen und in dem ersten Speicher (421) gespeichert werden,
einer Mittelqualitätsbildausgabeeinheit (11) für das Ausgeben einer Korrekturfahne, wobei die aus der Mittelqualitätsbildausgabeeinheit (11) ausgegebene Korrekturfahne eine einfache Papierausgabe für die kurze Überprüfung des Aussehens einer endgültigen Ausgabe auf einer Blockkkopie ist, und
einer Hochqualitätsbildausgabeeinheit (10) für das Ausgeben von aus der Bildeinrichtungseinheit (400) übertragenen Bilddaten als auszugebende Blockkopie, wobei die von der Hochqualitätsbildausgabeeinheit (10) ausgegebene Blockkopie eine Filmausgabe für die Ausbildung einer Druckplatte ist, wobei die Bildeinstelleinrichtung (400) die Blockkopie den folgenden Operationen entsprechend herstellt:
in der Workstation (300) wird ein linierter Ausgaberahmen definiert, der die Größe der Blockkopie und der Korrekturfahne hat,
ein erster Layoutrahmen wird entsprechend den Eigenschaften der Blockkopie in dem genannten linierten Rahmen definiert, und ein von einer in dem Dateiserver (200) gespeicherten Bilddatei repräsentiertes Bild wird darin eingefügt, um ein Ausgabeverarbeitungsanweisungsbild herzustellen,
ein zweiter Layoutrahmen wird entsprechend den Eigenschaften der Blockkopie in dem genannten linierten Rahmen definiert,
eine vorbestimmte Bildverarbeitung bezüglich des ersten und des zweiten Layoutrahmens wird durchgeführt, um eine Layoutanweisung auszubilden,
ein Ausgabeanweisungsbild für die Blockkopie und für die Korrekturfahne werden gesetzt, indem Seitenbeschreibungsdaten aus der Layoutanweisung vorbereitet werden, und
eine Anweisungsdatei, die die Layoutanweisung enthält, wird an die Bildeinrichtungseinheit (400) übertragen, um die Blockkopie oder die Korrekturfahne herzustellen,
wobei ein Ergebnis eines Ausgabeverarbeitungsanweisungsbildes auf einem Anzeigeteil der Workstation (200) grob angezeigt wird, eine Beschreibung der Bildverarbeitung als Kommentarzeile auf dem Anzeigeteil angezeigt wird, und wobei ein folgender Bearbeitungsbereich mit einer Maus (306) und mit einer Tastatur (302) bestimmt werden kann.

2. Bildverarbeitungssystem nach Anspruch 1, bei dem die Bildeinrichtungseinheit (400) wenigstens einen der folgenden Prozesse für die Bildverarbeitung verwendet:
1) einen Prozeß, der in der Lage ist, ein Rechteck, einen Kreis, eine Ellipse, ein Vieleck, einen Abschnitt oder ähnliches als Form des genannten Bereichs zu bestimmen und das Vorhandensein einer Umrißlinie anzugeben,
2) einen Prozeß, der in der Lage ist, Daten darüber anzugeben, ob der genannte Bereich transparent oder undurchsichtig ist,
3) einen Prozeß, der in der Lage ist, die gelesenen Bilddaten, die in dem Dateiserver (200) gespeichert sind, an den genannten Bereich zu trimmen und zu setzen,
4) einen Prozeß, der eine logische Operation ausführt zwischen Bilddaten in dem genannten Bereich und Bilddaten, die unmittelbar vor der Verarbeitung in einem Bereich eines Ausgabeverarbeitungsanweisungsbild ausgewiesen wurden,
5) einen Prozeß, der einen unmittelbar vor der Verarbeitung ausgewiesenen Bereich eines Ausgabeverarbeitungsanweisungsbild dem genanntem Bereich entsprechend ausschneidet und ihn an einen Arbeitspufferspeicher überträgt,
6) einen Prozeß, der Bilddaten, die sich in dem Arbeitspufferspeicher befinden, in den genannten Bereich einfügt,
7) einen Prozeß, der Farbton oder Schattierung auf dem genannten Bereich oder einem dementsprechenden Bereich des Ausgabeverarbeitungsbild setzt, oder
8) einen Prozeß, der Schriftzeichen für den Druck als Negativ, Schatten, Umriß und ähnliches in dem genannten Bereich oder einem dementsprechenden Bereich des Ausgabeverarbeitungsbildes vorbereitet.

3. Bildverarbeitungssystem nach Anspruch 1, bei dem ein Ausgabebild für die Blockkopie vorbereitet wird, indem Dateidaten für die Hochqualitätsbildausgabeeinheit (10) expandiert werden, die komprimiert und in dem Dateiserver (200) gespeichert sind.

4. Bildverarbeitungssystem nach Anspruch 1, mit weiterhin
einer Umschalteinrichtung für das Umschalten einer Verbindung der Eingabeeinheit (1) zwischen einer direkten Verbindung mit der Hochqualitätsbildausgabeeinheit (10) und einer Editierverbindung für das Speichern der Bilddaten in einer Eingabesteuereinrichtung (100) und dem Datenserver (200), für das Editieren der Daten in der Workstation (300), für das Verarbeiten der Daten in der Bildeinstelleinrichtung (400) und für das Ausgeben der Daten an die Hochqualitätsbildausgabeeinheit (10) oder an die Mittelqualitätsbildausgabeeinheit (11).

5. Bildverarbeitungssystem nach Anspruch 1, bei der die Bildeinstelleinrichtung (400) weiterhin enthält:
einen ersten Speicher (421) für das Speichern der Ausgabebilddaten,
einen zweiten Speicher (423) für das Speichern der expandierten Bilddaten,
einen gemeinsamen Speicher (424) für das Speichern der Bitmapdaten, und
eine logische Operationsschaltung (458) für das Empfangen der genannten Bitmapdaten und Bilddaten und für das Ausführen von logischen Operationen bezüglich dieser Daten, um die in dem ersten Speicher (421) gespeicherten Ausgabebilddaten herzustellen.

6. Bildverarbeitungssystem nach Anspruch 1, bei dem die Bildeinstelleinrichtung (200) weiterhin die folgenden Operationen ausführt:
das Speichern von Bild- und Bitmapdaten in einem ersten Speicher (421) nachdem die genannten Bilddaten in der Bildeinstelleinrichtung (400) editiert sind,
die Entscheidung ob eine Modifikation der editierten Daten vorzunehmen ist oder nicht, und
das Ausgeben der vollständig editierten Daten als Blockkopie und Korrekturfahne.

7. Bildverarbeitungssystem nach Anspruch 1 mit weiterhin
einer Eingabeeinrichtung für das Eingeben von Daten, die über einen CPU-Bus (412) an ein Betriebsartregister (451), ein Konstantenregister (454) und den ersten und zweiten Zähler (460, 462) übertragen werden,
eine Adressierungseinrichtung für das Adressieren von Bilddatenspeicherstellen in dem ersten Speicher (421) durch einen ersten Multiplexer (464),
eine Ausgabeeinrichtung für das Ausgeben von gleichmäßig geformten Daten aus einem Maskenmustergate (453) basierend auf und ausgegeben von einer Bitsteuereinrichtung (452), und
einer Zuführeinrichtung für das Zuführen von Bilddaten zu dem ersten Speicher (421) durch Zuführen der Ausgabe aus dem Mustermaskengate (453) über einen zweiten Multiplexer (459) an den ersten Speicher (459).

## Revendications

1. Un système de traitement d'image comprenant :
une unité d'entrée (1) pour lire une image originale et pour générer des données d'image correspondant à l'image originale qui est lue;
un serveur de fichiers (200) pour enregistrer des données comprenant des fichiers d'image correspondant aux données d'image qui sont générées;
une unité de commande d'entrée (100) pour enregistrer dans le serveur de fichiers (200) des données qui sont lues par l'unité d'entrée (1);
une station de travail (300) pour visualiser l'image enregistrée et pour traiter les fichiers d'image;
une unité de traitement d'image (400) pour appliquer un traitement d'image aux fichiers d'image qui sont visualisés à la station de travail (300), cette unité de traitement d'image (400) comprenant une première mémoire (421) pour enregistrer des données d'image, et un multiplexeur d'adressage (464), une sortie de ce multiplexeur d'adressage (464) étant connectée à la première mémoire (421), pour identifier des adresses des données d'image à lire et à enregistrer dans la première mémoire (421);
une unité de sortie d'image de qualité moyenne (11) pour fournir une épreuve, cette épreuve qui est émise par l'unité de sortie d'image de qualité moyenne (11) étant un tirage sur papier ordinaire pour voir brièvement à l'avance un aspect de sortie final sur un cliché; et
une unité de sortie d'image de haute qualité (10) pour fournir des données d'image qui sont transférées à partir de l'unité de traitement d'image (400), sous la forme du cliché à fournir, ce cliché qui est fourni par l'unité de sortie d'image de haute qualité (10) consistant en un tirage sur film pour produire une forme d'impression, et l'unité de traitement d'image (400) produisant le cliché conformément aux opérations suivantes :
on définit dans la station de travail (300) un cadre de sortie avec des bordures ayant la taille du cliché et de l'épreuve;
on définit un premier cadre de mise en page conformément aux caractéristiques du cliché, à l'intérieur du cadre avec bordures, et on incorporé à l'intérieur une image représentée par un fichier d'image enregistré dans le serveur de fichiers (200), pour produire une image d'instruction de traitement de sortie;
on définit un second cadre de mise en page conformément aux caractéristiques du cliché à l'intérieur du cadre avec bordures;
on effectue un traitement d'image prédéterminé concernant les premier et second cadres de mise en page, pour former une instruction de mise en page;
on compose une image d'instruction de sortie pour le cliché et pour l'épreuve en préparant des données de description de page à partir de l'instruction de mise en page; et
on transfère vers l'unité de traitement d'image (400) un fichier d'instruction contenant l'instruction de mise en page, pour produire le cliché ou l'épreuve;
et un résultat d'une image d'instruction de traitement de sortie est visualisé de façon grossière sur une partie de visualisation de la station de travail (200), une description pour le traitement d'image est visualisée sous la forme de lignes de commentaires sur la partie de visualisation, et une zone de traitement suivante peut être désignée avec une souris (306) et avec un clavier (302).

2. Un système de traitement d'image selon la revendication 1, dans lequel l'unité de traitement d'image (400) utilise l'un au moins des processus suivants pour le traitement d'image :
1) un processus capable de désigner un rectangle, un cercle et une ellipse, un polygone, une section ou autres, à titre de forme de la région considérée, et d'indiquer la présence de la bordure de contour;
2) un processus capable de désigner des données indiquant si la région considérée est transparente ou opaque;
3) un processus capable d'ajuster et de placer dans la région considérée les données d'image lues qui sont enregistrées dans le serveur de fichiers (200);
4) un processus accomplissant une opération logique entre des données d'image dans la région considérée et des données d'image qui ont été affectées immédiatement avant le traitement à l'intérieur d'une zone sur une image d'instruction de traitement de sortie;
5) un processus découpant une zone d'une image d'instruction de traitement de sortie, affectée immédiatement avant le traitement, conformément à la région considérée, et transférant celle-ci vers une mémoire tampon de travail;
6) un processus incorporant dans la région considérée des données d'image qui demeurent dans la mémoire tampon de travail;
7) un processus d'application d'une teinte ou d'une ombre sur la région considérée ou sur une zone de l'image de traitement de sortie, conformément à celle-ci; ou
8) un processus préparant des caractères pour l'impression, tels que des caractères en mode inversé, avec ombre, "à jour" et autres, dans la région considérée ou dans une zone de l'image de traitement de sortie, conformément à celle-ci.

3. Un système de traitement d'image selon la revendication 1, dans lequel une image de sortie pour le cliché est préparée en décompressant des données de fichier pour l'unité de sortie d'image de haute qualité (10), qui sont compressées et enregistrées dans le serveur de fichiers (200).

4. Un système de traitement d'image selon la revendication 1, comprenant en outre :
des moyens de commutation pour commuter une connexion de l'unité d'entrée (1) entre une connexion directe vers l'unité de sortie d'image de haute qualité (10), et une connexion d'édition pour enregistrer les données d'image dans l'unité de commande d'entrée (100) et dans le serveur de fichiers (200), pour éditer les données dans la station de travail (300), pour traiter les données dans l'unité de traitement d'image (400), et pour émettre les données vers l'unité de sortie d'image de haute qualité (10) ou vers l'unité de sortie d'image de qualité moyenne (11).

5. Un système de traitement d'image selon la revendication 1, dans lequel l'unité de traitement d'image (400) comprend en outre :
une première mémoire (421) pour enregistrer des données d'image de sortie;
une seconde mémoire (423) pour enregistrer des données d'image décompressées;
une mémoire commune (424) pour enregistrer des données de grille de bits, et
un circuit d'opération logique (458) pour recevoir les données de grille de bits et les données d'image, et pour effectuer des opérations logiques sur celles-ci, de façon à produire des données d'image de sortie qui sont enregistrées dans la première mémoire 421).

6. Un système de traitement d'image selon la revendication 1, dans lequel l'unité de traitement d'image (200) accomplit en outre les opérations suivantes :
elle enregistre des données d'image et de grille de bits dans une première mémoire (421), après l'édition des données d'image dans l'unité de traitement d'image (400);
elle détermine si des modifications doivent être apportées ou non aux données éditées; et
elle fournit en sortie des données entièrement éditées, pour le cliché et l'épreuve.

7. Un système de traitement d'image selon la revendication 1, comprenant en outre :
des moyens d'entrée pour introduire des données qui sont transférées par l'intermédiaire d'un bus d'unité centrale (412) vers un registre de mode (451) et un registre de constante (454), et des premier et second compteurs (460, 462),
des moyens de décalage rapide pour effectuer un décalage rapide dans un registre à décalage circulaire (457), sur les données d'image émises, conformément au registre de mode (451),
des moyens d'adressage pour adresser des positions de données d'image dans la première mémoire (421), par l'intermédiaire d'un premier multiplexeur (464),
des moyens d'émission pour émettre des données de forme régulière à partir d'une porte de configuration de masque (453), ces données étant émises par une unité de commande de bits (452) et étant émises par cette dernière, et
des moyens pour fournir des données d'image à la première mémoire (421), en fournissant les données de sortie de la porte de configuration de masque (453) à la première mémoire (421), par l'intermédiaire d'un second multiplexeur (459).
